**Europäisches Patentamt**

**European Patent Office**

**Office européen des brevets**

(11) Veröffentlichungsnummer: **0 004 963**

A1

(12) # EUROPÄISCHE PATENTANMELDUNG

(21) Anmeldenummer: **79101164.6**

(51) Int. Cl.²: **B 29 C 25/00**

(22) Anmeldetag: **17.04.79**

(30) Priorität: **19.04.78 JP 45328/78**

(43) Veröffentlichungstag der Anmeldung:
**31.10.79 Patentblatt 79/22**

(84) Benannte Vertragsstaaten:
**BE DE FR GB LU NL**

(71) Anmelder: **TORAY INDUSTRIES, INC.
2, Nihonbashi-Muromachi 2-chome Chuo-ku
Tokio 103(JP)**

(72) Erfinder: **Kawakami, Ken-ichi
2-10 Sonoyama Otsu-shi
Shiga-ken(JP)**

(72) Erfinder: **Saito, Shoji
2-6-36 Nishi-shibukawa Kusatsu-shi
Shiga-ken(JP)**

(72) Erfinder: **Togashi, Shizuo
25-405, 1-11 Ohira Otsu-shi
Shiga-ken(JP)**

(74) Vertreter: **Wettlauffer, Willy, Dr. et al,
Kalle Niederlassung der Hoechst AG Rheingaustrasse
190 Postfach 3540
D-6200 Wiesbaden 1(DE)**

(54) Verfahren zur Erhöhung der Rauhigkeit der Oberfläche von gestrecktem thermoplastischem Kunststoffmaterial.

(57) Verfahren zur Erhöhung der Rauhigkeit der Oberfläche von gestrecktem, thermoplastischem Kunststoffmaterial, insbesondere von Kunststoff-Folien.

Das Verfahren ist vorzugsweise auf Kunststoffmaterial aus Polyester oder Polypropylen anwendbar.

Das Verfahren besteht darin, daß man vorzugsweise vor dem ersten Streckschritt und oder während des Streckens das Kunststoffmaterial mit Ulraviolettlicht bestrahlt, wobei durch Wahl der Intensivität der Bestrahlung die Rauhtiefe geändert werden kann.

Die nach dem Verfahren hergestellten Folien sind gut gleitfähig und eignen sich besonders auch für den Einsatz als Kondensator- oder Zeichenfolie.

Fig. 3

TORAY INDUSTRIES, INC., Tokio/Japan

Hoe 78/K 088                          Wiesbaden-Biebrich 20. März 1979
                                                      WLJ-Dr.Kn-mp

0004963

Verfahren zur Erhöhung der Rauhigkeit der Oberfläche von
gestrecktem thermoplastischem Kunststoffmaterial

Die vorliegende Erfindung betrifft ein Verfahren zur Erhöhung
der Rauhigkeit der Oberfläche von gestrecktem thermoplastischem Kunststoffmaterial, insbesondere von Kunststoff-Folien.

Thermoplastische Folien werden häufig auf sehr unterschiedlichen Gebieten, wie z.B. zum Kaschieren mit anderen Substraten, zur Herstellung von Kondensatoren, zum Bedrucken,
zum Metallisieren, als Zeichenfolie, als Basisfolie für
Magnetbänder und für optische Zwecke eingesetzt. Die gestreckten Thermoplaste sind jedoch wegen ihrer allzu glatten Oberflächen für die genannten Anwendungen nur bedingt geeignet.

Man hat versucht, die Oberflächenrauhigkeit gestreckter
Thermoplaste mit Hilfe verschiedener Verfahren zu verbessern, so z.B. mit physikalischen Verfahren, wie Kratzen,
Sandstrahlen und Prägen mit Walzen, aber auch mit chemischen
Verfahren, z.B. Ätzen. Diese bekannten Verfahren haben aber
den Nachteil zu hoher Lohn- und Anlagekosten, da die Arbeitsgänge zur Erhöhung der Oberflächenrauhigkeit getrennt von
der Folienherstellungsanlage durchgeführt werden müssen.
Darüber hinaus sind diese bekannten Verfahren nicht für alle
Anwendungsgebiete erfolgreich, weil sich bei ihnen der
Rauhigkeitsgrad der Oberflächen nicht exakt steuern läßt.

Aufgabe der Erfindung war es deshalb ein Verfahren zu entwickeln, bei dem gestreckte thermoplastische Kunststoffmaterialien, insbesondere Folien, erhalten werden, die eine erhöhte Rauhigkeit aufweisen.

Die erhöhten Oberflächenrauhigkeiten sind z.B. hinsichtlich Gleitfähigkeit, Benetzbarkeit mit Öl, Eignung zum Beschriften und Mattierung wichtig.

Gelöst wird die vorstehend genannte Aufgabe durch ein Verfahren zur Erhöhung der Rauhigkeit der Oberflächen von wenigstens einachsig gestrecktem, thermoplastischem Kunststoffmaterial, dessen kennzeichnendes Merkmal darin besteht, daß man vorzugsweise vor dem ersten Streckschritt das Kunststoffmaterial wenigstens einseitig mit Ultraviolettlicht bestrahlt.

Bei dem erfindungsgemäßen Verfahren geht es in erster Linie um das Strecken von mit ultraviolettem Licht (nachfolgend UV genannt) bestrahltem Kunststoffmaterial, insbesondere von Folien, in mindestens einer Richtung. Zur Vereinfachung der nachfolgenden Beschreibung werden die Folien als die typischen Kunststoffmaterialien dargestellt, und obwohl das Strecken gemäß der Erfindung entweder nach oder während der UV-Bestrahlung durchgeführt werden kann, ist die Beschreibung insbesondere auf das Strecken nach der UV-Bestrahlung bezogen.

Für die vorliegende Erfindung ist es wesentlich, daß die UV-Bestrahlung und das Strecken gemeinsam angewendet werden, d.h. der Effekt der Oberflächenaufrauhung kann nicht durch die UV-Bestrahlung allein oder durch das Strecken allein erzielt werden. Darüber hinaus erreicht die Erfindung ihre Wirkung nicht durch eine UV-Bestrahlung nach dem Strecken. Die Wirkung kann jedoch erzielt werden, wenn eine bereits einmal gestreckte Folie nach der UV-Bestrahlung erneut gestreckt wird. Die Wirkung der Erfindung beruht also auf der Streckvorgang nach und/oder während der UV-Bestrahlung. Innerhalb der vorliegenden Erfindung sind alle streckbaren thermoplastischen Polymere einsetzbar, dazu gehören u.a. Polyolefine (Polyäthylen, Polypropylen, Äthylen/Propylen-Mischpolymerisat usw.), Polyester (Polyäthylenterephtalat, Polybutylenterephtalat usw.), Polyamide (Nylon 6, Nylon 66, Nylon 12 usw.) und Polystyrole (Polystyrol, Styrol-Acrylnitril usw.). Polypropylen (nachfolgend PP genannt) und Polyäthylenterephtalat (nachfolgend PET genannt) werden innerhalb der Erfindung bevorzugt verwendet. Erforderlichenfalls können die üblichen Zusätze und/oder andere Polymere in die thermoplastischen Polymere eingearbeitet werden. In manchen Fällen werden bevorzugt UV-empfindliche Zusätze, wie z.B. Benzophenon, eingearbeitet.

Das bei dem Verfahren verwendete UV-Licht, das z.B. von Niederdruck- und/oder Hochdruck-Quecksilberdampflampen, Leuchtstoffröhren, Xenonlampen und Kohlelichtbogenlampen ausgestrahlt wird, hat eine Wellenlänge im Bereich von 180 bis 400 nm, vorzugsweise von 190 bis 380 nm. Mindestens eine Oberfläche der Folie wird mit dem UV-Licht einer im Abstand von 1 bis 50 cm von der Folie angeordneten Lichtquelle bestrahlt. Im Bestrahlungsbereich kann die Folie Raumtemperatur haben, um jedoch einen noch besseren Behandlungsgrad zu erreichen, wird die Folie vorzugsweise unmittelbar vor dem Bestrahlen vorgeheizt oder während der Bestrahlung aufgeheizt. Ferner wird anstelle von Luft eine Atmosphäre aus Sauerstoff, Ozon, Stickstoff oder Kohlendioxid im Bestrahlungsbereich bevorzugt.

Die Bestrahlungsenergie kann zwischen 1 und 5000 Joule/cm$^2$ liegen und läßt sich mit einem in Höhe der Folienoberfläche angebrachten UV-Strahlungsmesser messen. Der Strahlungsmesser zeigt die Lichtintensität pro Flächen- und Zeiteinheit (Watt/cm$^2$) an. Die Bestrahlungsenergie ist definiert als das Produkt aus Lichtintensität und Bestrahlungszeit und wird in Joule/cm$^2$ (nachfolgend J/cm$^2$ genannt) ausgedrückt. Innerhalb des genannten Bereiches ist die Bestrahlungsenergie entsprechend dem gewünschten Grad der Oberflächenbehandlung der verschiedenen, unten aufgeführten Polymermaterialien zu wählen.

Um die Folienoberfläche ohne Einbuße an Folientransparenz gleitfähig zu machen, liegt die Bestrahlungsenergie zweckmäßigerweise für PP im Bereich von 1 bis 10 J/cm$^2$ und für PET im Bereich von 5 bis 50 J/cm$^2$. Liegt die Energie unter dem angegebenen Bereich, ergibt sich eine unbefriedigende Gleitfähigkeit. Überschreitet die Energie diesen Bereich dagegen, so wird die Transparenz schlecht. Im Anschluß an die Bestrahlung innerhalb des genannten Energiebereiches wird die Folie gestreckt. Die Oberflächenrauhigkeit der gestreckten Folie liegt zwischen 0,01 und 0,50 µm.

Eine mattierte, feuchtigkeits- und ölbenetzbare Folienoberfläche wird erzielt, wenn die Bestrahlungsenergie für PP im Bereich von 5 bis 50 J/cm$^2$ und für PET im Bereich von 50 bis 500 J/cm$^2$ liegt. Bei einer Energie unter dem jeweils genannten Bereich ist die angestrebte Wirkung unzulänglich. Überschreitet die Energie den Bereich dagegen, so wird die Folie zu trüb. Im Anschluß an die Bestrahlung in dem genannten Energiebereich wird die Folie gestreckt. Die Oberflächenrauhigkeit der gestreckten Folie liegt zwischen 0,5 und 5,0 μm.

Eine für das Beschriften mit Bleistift geeignete Folienoberfläche wird erzielt, wenn die Bestrahlungsenergie für PP im Bereich von 10 bis 100 $J/cm^2$ und für PET im Bereich von 500 bis 5 000 $J/cm^2$ liegt. Bei einer geringeren als der angegebenen Energie ist die Beschriftbarkeit der Folie nicht gut genug. Überschreitet die Energie den genannten Bereich dagegen, so verschlechtert sich die Folienqualität, und die Folie wird spröde. Nach der Bestrahlung in dem genannten Energiebereich wird die Folie gestreckt. Die Oberflächenrauhigkeit der gestreckten Folie liegt zwischen 1 und 10 μm.

Als Streckverfahren sind bei dieser Erfindung das Strecken in einer Richtung und das biaxiale Strecken nach dem UV-Bestrahlen der unverstreckten Folien anwendbar. Beim biaxialen Strecken kann nach beiden üblichen Verfahrensweisen, d.h. sowohl aufeinanderfolgend als auch simultan biaxial gestreckt werden. Es können jedoch z.B. auch Streckverfahren angewandt werden, bei denen die unverstreckte Folie zunächst in einer Richtung gestreckt, dann UV-bestrahlt und anschließend im rechten Winkel zur ersten Streckrichtung erneut gestreckt wird oder die unverstreckte Folie zunächst UV-bestrahlt, dann biaxial gestreckt und schließlich noch einmal in einer Richtung gestreckt wird.

Beim Strecken der Folie in einer Richtung wird das PP vorzugsweise um das 4- bis 8-fache und PET um das 2-bis 5-fache gestreckt. Beim biaxialen Strecken der Folie wird PP vorzugsweise um das 20- bis 60-fache und PET um das 5- bis 20-fache, bezogen auf die ursprüngliche Fläche, gestreckt.

TORAY INDUSTRIES, INC., Tokio/Japan    0004963

- 6 -

Die Strecktemperatur ist dabei jeweils nach dem Folienmaterial auszuwählen. Für PP ist z.B. eine Temperatur
zwischen 120 und 160$^{O}$C und für PET eine Temperatur zwischen 80 und 160$^{O}$C üblich.

Die so gestreckte Folie wird vorzugsweise anschließend
thermofixiert, bei PET z.B. in einem Temperaturbereich von
120 bis 240$^{O}$C, bei PP in einem Temperaturbereich von
150 bis 175$^{O}$C. Vorzugsweise wird die Folie nach dem Thermofixieren einer der bekannten Oberflächenbehandlungen, z.B.
einer Coronabehandlung, unterzogen.

Zu erwähnen ist, daß nicht immer erst nach der Warmformgebung der Folie UV-bestrahlt wird. Die UV-Bestrahlung
kann auch durchgeführt werden, während die Folie noch
schmelzflüssig ist.

Es folgen    einige Beispiele für die am meisten bevorzugten Ausführungsformen der Erfindung, durch die jedoch
die Erfindung in ihrem Umfang nicht eingeschränkt werden
soll. Die in den Beispielen zur Charakterisierung verwendeten Begriffe haben die folgende Bedeutung:

1. Oberflächenrauhigkeit
Als Oberflächenrauhigkeit wird die Differenz zwischen dem
Höchstwert und dem Mindestwert in einem Rauhigkeitsspektrum
nach JIS B-0601-1976 angegeben, gemessen mit einem Gerät
der Marke "Talysurf Model-4" der Taylor-Hobson Company.

2. Gleiteigenschaft
Für die Gleiteigenschaft wird der nach ASTM D-1894-B gemessene Haftreibungskoeffizient angegeben.

3. Trübung

Die Trübung wurde nach ASTM D-1003-52 gemessen.

Die Figuren 1,2 und 3 sind Mikrophotos (1 000-fache Vergrößerung) von Oberflächen biaxial gestreckter Polyäthylenterephtalatfolien.

Fig. 1 zeigt eine ohne UV-Bestrahlung gestreckte Oberfläche,
Fig. 2 zeigt eine Oberfläche, die nach einer UV-Bestrahlung von 12 Joule/$cm^2$ gestreckt wurde,
Fig. 3 zeigt eine Oberfläche, die nach einer UV-Bestrahlung von 72 Joule/$cm^2$ gestreckt wurde.

Die Figuren 4 und 5 sind Mikrophotos (40-fache Vergrößerung) biaxial gestreckter Polypropylenfolien.

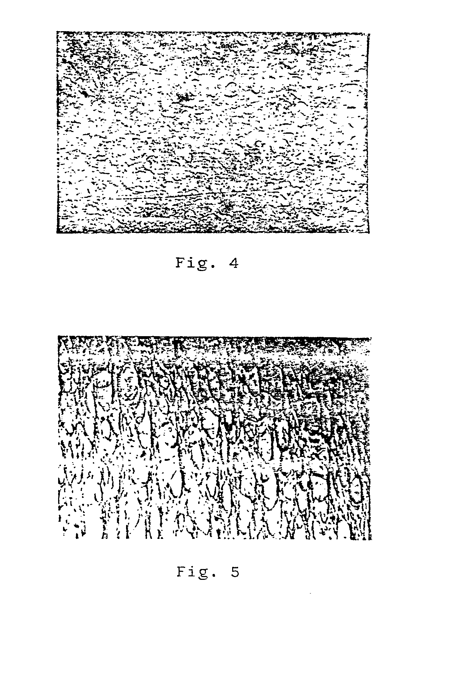

Fig. 4 zeigt eine ohne UV-Bestrahlung gestreckte Oberfläche,
Fig. 5 zeigt eine Oberfläche, die nach einer UV-Bestrahlung von 24 Joule/$cm^2$ gestreckt wurde.

Beispiel 1

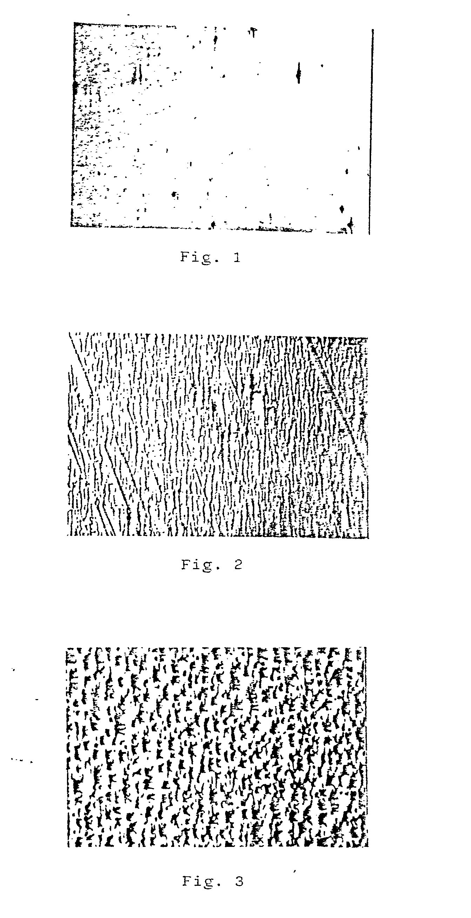

Es wurde eine unverstreckte, transparente PET-Folie (Dicke 250 µm) hergestellt. Eine Oberfläche der Folie wurde mit UV-Licht bestrahlt (Lichtquelle: Quecksilberdampflampe H 400-P, Hersteller: Tokio Shibaura Electric Company). Die Lichtquelle befand sich im Abstand von 10 cm von der Folienoberfläche, die umgebende Atmosphäre bestand aus Luft, und die Dauer der Behandlung betrug 10 Minuten. Die Bestrahlungsenergie betrug 12 J/$cm^2$, und die Temperatur der Folienoberfläche im Bestrahlungsbereich wurde auf 80$^{\circ}$C gehalten. Beim Betrachten der bestrahlten Oberfläche unter einem Mikroskop konnten keine strukturellen und/oder morphologischen Veränderungen festgestellt werden. Die
Oberfläche war ebenso glatt wie vor dem Bestrahlen. Die
Folie wurde dann bei einer Temperatur von 80°C biaxial
gestreckt und zwar in beiden Richtungen um das 3,3-fache
ihrer ursprünglichen Abmessungen. Danach wurde sie für 10
Sekunden bei 220°C thermofixiert. Die so erhaltene Folie
zeigte unter einem Differential-Interferenzmikroskop
(1 000-fache Vergrößerung) die in Fig. 2 abgebildete Oberfläche. Zum Vergleich ist in Fig. 1 die Oberfläche einer
nur biaxial gestreckten Folie ohne UV-Bestrahlung wiedergegeben. Ein Vergleich zwischen den Figuren 1 und 2 läßt
erkennen, daß die nach UV-Bestrahlung gestreckte Folie
(Fig.2) viele kleine Unebenheiten auf der bestrahlten Oberfläche aufweist. Bedingt durch die extrem kleinen Abmessungen der Unebenheiten war die resultierende Oberfläche
gleitfähig und die Folie blieb transparent, wie in der
folgenden Tabelle aufgezeigt:

| Merkmale | PET-Folien | |
|---|---|---|
| | mit UV-Bestrahlung (Figur 2) | ohne UV-Bestrahlung (Figur 1) |
| Trübung (%) | 0,4 | 0,3 |
| Haftreibungs- koeffizient | 0,50 | über 4,0 |
| Oberflächen- rauhigkeit (µm) | 0,05 | unter 0,01 |

Auf der Oberfläche einer mit 12 $J/cm^2$ UV-bestrahlten Folie, die zuvor einmal ohne Bestrahlung biaxial gestreckt worden war, wurden keine Veränderungen festgestellt.

Beispiel 2

Es wurde wie in Beispiel 1 verfahren, mit dem Unterschied, daß die Bestrahlungsenergie in diesem Fall 72 $J/cm^2$ betrug. Figur 3 ist eine Aufnahme (1 000-fache Vergrößerung) der erhaltenen Oberfläche. Ein Vergleich der Fig.3 mit den Figuren 1 und 2 macht deutlich, daß die Unebenheiten bei der höheren Bestrahlungsenergie größer geworden sind. Die Oberflächenrauhigkeit der Folie wurde mit 0,7 $\mu$m gemessen, was eine ausreichende Mattierungswirkung ergab und ausgezeichnet zu einer Verbesserung der Benetzungseigenschaften, wie z.B. mit Öl, beitrug.

Beispiel 3

Es wurde wie in Beispiel 1 verfahren, mit dem Unterschied, daß ein anderes Folienmaterial und eine andere Bestrahlungsenergie genommen wurde. Aus PP-Granulat mit einem Schmelzindex von 2,0 g/10min wurde eine unverstreckte, transparente PP-Folie hergestellt. Die unverstreckte Folienoberfläche wurde bei einer Temperatur von 100$^o$C mit einer UV-Bestrahlungsenergie von 24 $J/cm^2$ behandelt. Die bestrahlte Folie wurde dann auf 130$^o$C vorgeheizt und auf das 5-fache ihrer ursprünglichen Länge längsgestreckt. Anschließend wurde die Folie in einem Streckrahmen mit umlaufender Heißluft von 155$^o$C auf das 9-fache ihrer ursprünglichen Breite quergestreckt. Die biaxial gestreckte Folie wurde danach 3 sec lang in Heißluft von 163$^o$C thermofixiert, wobei man ihr eine Relaxation in Querrichtung um einen Faktor von 8%
ihrer Streckbreite gestatten. Die thermofixierte Folie
wurde rasch abgekühlt. Die auf diese Weise hergestellte Folie hatte eine Dicke von 8 μm. In Figur 5 ist ihre Oberfläche unter einem Phasenkontrastmikroskop gezeigt. Zum Vergleich gibt die Figur 4 die Oberfläche einer nur biaxial
gestreckten Folie ohne UV-Bestrahlung wieder. Bei beiden
Mikrophotos wurde mit 40-facher Vergrößerung gearbeitet.
Der Vergleich zwischen den Figuren 4 und 5 macht deutlich,
daß die nach UV-Bestrahlung gestreckte Folie (Fig. 5) auf
der bestrahlten Oberfläche eine stark ausgeprägte, deutlich
in Erscheinung tretende faserartige Struktur aufweist. Die
weiteren Ergebnisse sind in der Tabelle unten aufgeführt:

| Merkmale | PP-Folien | |
|---|---|---|
| | mit UV-Bestrahlung (Fig. 5) | ohne UV-Bestrahlung (Fig. 4) |
| Trübung (%) | 31,6 | 1,5 |
| Haftreibungs-koeffizient | 0,50 | 0,65 |
| Oberflächen-rauhigkeit (μm) | 3,20 | 0,06 |

Die Oberfläche der so hergestellten Folie war zufriedenstellend in bezug auf ihre Mattierung, ihre Eignung für die
Bleistiftbeschriftbarkeit und ihre Benetzbarkeit, z.B. mit
Kondensatoröl.

Auf der Oberfläche einer mit 24 J/cm$^2$ UV-bestrahlten Folie, die zuvor einmal ohne Bestrahlung biaxial gestreckt worden war, waren fast keine Veränderungen festzustellen.

Beispiel 4

Eine 300 µm dicke unverstreckte Folie aus Nylon 6 (hergestellt aus "Amilan" CM-1021L von Toray Ind., Inc.) wurde mit 36 J/cm$^2$ UV-bestrahlt. Die Folie wurde dann auf 90$^{\circ}$C vorgeheizt und gleichzeitig in Längs- und Querrichtung um das 3,3-fache gestreckt. Anschließend wurde sie bei 180$^{\circ}$C thermofixiert. Die so erhaltene biaxial gestreckte Folie war 25 µm dick. In der folgenden Tabelle sind die Auswertungsergebnisse für diese Folie im Vergleich zu einer ohne UV-Bestrahlung gestreckten Folie angegeben:

| Merkmale | PA-Folien | |
|---|---|---|
| | mit UV-Bestrahlung | ohne UV-Bestrahlung |
| Trübung (%) | 35,2 | 1,0 |
| Haftreibungs-koeffizient | 0,40 | 0,80 |
| Oberflächen-rauhigkeit (µm) | 3,55 | 0,08 |

Die Oberfläche der auf diese Weise hergestellten Folie war befriedigend in bezug auf die Mattierung, die Benetzbarkeit mit Feuchtigkeit und Öl und die Eignung für die Bleistiftbeschriftbarkeit.

Beispiel 5

Eine unverstreckte Polystyrol-Folie (hergestellt aus "Stylon 679" von Asahi Dow Ltd.) wurde mit 50 $J/cm^2$ UV-bestrahlt und dann in Längs- und Querrichtung jeweils um das 3,5-fache gestreckt. Die so erhaltene biaxial gestreckte Folie war 20 µm dick. Die Tabelle unten zeigt die Auswertungsergebnisse für diese Folie im Vergleich zu einer ohne UV-Bestrahlung gestreckte Folie:

| Merkmale | PS-Folien | |
| --- | --- | --- |
| | mit UV-Bestrahlung | ohne UV-Bestrahlung |
| Trübung (%) | 5,3 | 0,4 |
| Haftreibungs-koeffizient | 0,40 | 4,0 |
| Oberflächen-rauhigkeit (µm) | 0,15 | 0,05 |

Beispiel 6

Ein unverstrecktes PET-Garn wurde mit 20 $J/cm^2$ UV-bestrahlt. Anschließend wurde nach dem herkömmlichen Streckverfahren ein 80 den-Faden hergestellt. Dieser Faden wurde zu einer Gewebebahn verarbeitet. Es zeigte sich, daß das Gewebe gegenüber einem aus dem gleichen, nicht UV-bestrahlten Faden hergestellten Gewebe eine erhebliche Verbesserung in bezug auf den weichen Griff, die Benetzbarkeit und Färbbarkeit aufwies.

TORAY INDUSTRIES, INC., Tokio/Japan

Hoe 78/K 088                    Wiesbaden-Biebrich 20. März 1979

- A 1 -

Patentansprüche

1. Verfahren zur Erhöhung der Rauhigkeit der Oberflächen von wenigstens einachsig gestrecktem, thermoplastischem Kunststoffmaterial, dadurch gekennzeichnet, daß man vorzugsweise vor dem ersten Streckschritt das Kunststoffmaterial wenigstens einseitig mit Ultraviolettlicht bestrahlt.

2. Verfahren nach Anspruch 1, dadurch gekennzeichnet, daß man das Kunststoffmaterial vor oder während der Bestrahlung aufheizt.

3. Verfahren nach einem der Ansprüche 1 und 2, dadurch gekennzeichnet, daß man in den Raum zwischen der Oberfläche des Kunststoffmaterials und der Lichtquelle Sauerstoff, Ozon, Stickstoff oder Kohlendioxid einbringt.

4. Verfahren nach einem der Ansprüche 1 bis 3, dadurch gekennzeichnet, daß man nach dem Strecken eine Thermofixierung durchführt.

5. Verfahren nach einem der Ansprüche 1 bis 4, dadurch gekennzeichnet, daß man eine Folie bestrahlt.

6. Verfahren nach einem der Ansprüche 1 bis 4, dadurch gekennzeichnet, daß man eine Faser bestrahlt.

TORAY INDUSTRIES, INC., Tokio/Japan

0004963

Hoe 78/K 088

- A 2 -

7. Verfahren nach einem der Ansprüche 1 bis 6, dadurch gekennzeichnet, daß man mit einer Energie zwischen 1 und 5 000 Joule/cm² bestrahlt.

8. Anwendung des Verfahrens nach einem der Ansprüche 1 bis 7 auf Polyester oder Polypropylen.

-----

0004963

Fig. 1

Fig. 2

Fig. 3

0004963

Fig. 4

Fig. 5

TORAY INDUSTRIES, INC.
Hoe 78/K 088

**0004963**

## EUROPÄISCHER RECHERCHENBERICHT

Europäisches Patentamt

Nummer der Anmeldung

EP 79 10 1164

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| X | DE - A - 1 629 772 (WOLFF WALSRODE) <br> * Insgesammt * <br> -- | 1,5,7 |
| X | DE - A - 1 504 465 (KALLE) <br> * Insgesammt * <br> -- | 1,2,5, 8 |
| X | FR - A - 1 447 778 (KALLE) <br> * Insgesammt * <br> -- | 1,2,4, 5,8 |
| | DE - A - 1 504 685 (DU PONT DE NEMOURS) <br><br> * Seite 3, letzter Absatz bis Seite 4, Absatz 1; Seite 5, letzter Absatz * <br> -- | 1,2,4, 5,6 |
| | FR - A - 1 212 743 (W.R. GRACE) <br> * Insgesammt und insbesondere Seite 7, linke Spalte, letzter Absatz * <br> -- | 1-3,5, 7 |
| A | GB - A - 1 006 622 (TOYO RAYON) <br> * Insgesammt * <br> -- | 1 |
| A | FR - A - 1 092 664 (DU PONT DE NEMOURS) <br> * Insgesammt * <br> -- <br><br> ./. | 2,3,5, 8 |

**KLASSIFIKATION DER ANMELDUNG (Int.Cl.³)**

B 29 C 25/00

**RECHERCHIERTE SACHGEBIETE (Int. Cl.³)**

B 29 C 25/00
B 29 D  7/00
C 08 J  7/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 05-07-1979 | LABEEUW |

EPA form 1503.1   06.78

# 0004963

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| A | FR - A - 1 116 200 (BRITISH CELLOPHANE)  *  Insgesammt * | 2,3,5 | |
| | -- | | |
| A | US - A - 2 876 185 (DU PONT DE NEMOURS)  *  Insgesammt * | 1 | |
| | ---- | | RECHERCHIERTE SACHGEBIETE (Int. Cl.²) |

EPA Form 1503.2  06.78